(19) Europäisches Patentamt / European Patent Office / Office européen des brevets

(11) **EP 2 282 481 A1**

(12) **EUROPEAN PATENT APPLICATION**

(43) Date of publication:
09.02.2011 Bulletin 2011/06

(51) Int Cl.:
*H04L 29/08* (2006.01)          *H04L 12/10* (2006.01)

(21) Application number: 09167394.7

(22) Date of filing: 06.08.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(71) Applicant: **Pioneer Digital Design Centre Ltd**
**Slough SL2 4QP (GB)**

(72) Inventors:
• **Stuart, Mark**
**Slough, Buckinghamshire SL2 4QP (GB)**

• **Marsh, Richard**
**Slough, Buckinghamshire SL2 4QP (GB)**
• **Wilson, Shane**
**Slough, Buckinghamshire SL2 4QP (GB)**
• **Mukhopadhyay, Milton**
**Slough, Buckinghamshire SL2 4QP (GB)**

(74) Representative: **Haley, Stephen**
**Gill Jennings & Every LLP**
**The Broadgate Tower**
**20 Primrose Street**
**London EC2A 2ES (GB)**

(54) **Energy saving method and system**

(57)     A method for controlling the power consumption in a peer-to-peer (P2P) network of content delivery devices is provided. The method comprises the steps of: determining the capacity of the network to deliver each content unit stored on a device; determining the demand of the network for each content unit stored on the device; comparing the capacity with the demand for each content unit stored on the device; and controlling the power supplied to said device based on said comparison.

**Figure 1**

EP 2 282 481 A1

## Description

The present invention generally relates to television and media distribution networks. In particular, the present invention relates to a method and system for reducing energy consumption within a distribution network of cooperating peer devices or Peer-to-Peer (P2P) distribution networks.

Distribution of radio and television (TV) programmes, movies, music, ring tones, games, and various data applications to the general public is achieved today via a variety of dedicated networks and end user terminals. With the proliferation of broadband Internet, all content distribution services are increasingly conveyed to the general public via the Internet.

As broadband Internet becomes ubiquitous, there has been a substantial growth in demand for Internet television. However, the current infrastructure of the Internet is not suited to simultaneous transmission of live events to millions of people (i.e. broadcasting). The problem is that such transmissions require a dedicated stream of data to be sent to every single user. With millions of potential users, the simultaneous streams of data quickly congest the Internet.

For several years, this problem has been addressed by multicasting, whereby the data stream is distributed to many local servers that subsequently "re-broadcast" the content to local users. However, most Internet Protocol (IP) routers cannot support multicasting and there seems to be no financial incentive for the Internet service providers to introduce multicasting. Furthermore, the use of audiovisual media is moving from a collective and passive approach to personal active behaviour, at home and in mobile situations outside the home. At the same time, patterns are shifting towards non-linear usages, moving away from the classic model of linear broadcast TV. The TV set no longer has the monopoly of delivery of audiovisual content, with the personal computer (PC) and related media centres such as personal digital assistants (PDAs) and mobile phones, all becoming increasingly important.

In such heterogeneous environments, efficient content delivery needs optimised unicast, multicast and broadcast delivery, as well as support for new mechanisms that have been made possible by the recent advances in P2P-based technology. This situation has important consequences for the existing business models and institutions, as well as for content production, content distribution, and end user experience on various terminals. This holds in particular for organisations that propose services based on heterogeneous terminals and networks, given the demand from users of transparent service continuity.

To address these needs, P2P technology can be used to provide efficient and low-cost delivery of professional and user created content. Although P2P technology is not traditional content delivery/distribution (CDN) technology, it is extensively used to deliver content to end users, being considered by many as an efficient mechanism for distributing any media file or live stream. Accordingly, it has been recognised that the emerging P2P technology may be used to provide an open source, efficient, and participatory television plus media delivery mechanism with social and collaborative connotation.

However, the proposal for P2P television plus media distribution has raised concerns about the oversupply of content which may lead to gross inefficiency in the network operation. This is because many devices in such P2P networks would need to be left in a high-power state in case the content they are sharing is needed by other peers.

The present invention is directed towards reducing the overall energy consumption in P2P networks used to distribute television and media via the Internet in order to improve their overall efficiency and minimise costs.

According to the present invention there is provided a method for controlling the power consumption in a peer-to-peer network of content delivery devices wherein at least one device stores at least one content unit, the method comprising the steps of:

  determining the capacity of the network to deliver each content unit stored on a device;
  determining the demand of the network for each content unit stored on said device;
  comparing the capacity with the demand for each content unit stored on said device; and
  controlling the power supplied to said device based on said comparison.

Furthermore, according to the present invention there is also provided a system for controlling the power consumption in a peer-to-peer network of content delivery devices wherein at least one device stores at least one content unit, the system comprising:

  means for determining the capacity of the network to deliver each content unit stored on a device;
  means for determining the demand of the network for each content unit stored on said device;
  means for comparing the capacity with the demand for each content unit stored on said device; and
  means for controlling the power supplied to said device based on said comparison.

Accordingly, it is possible to reduce the overall energy consumption in a P2P network by evaluating the supply capability of a community of peers for a given piece of content.

The present invention will now be described with reference to the accompanying drawings, in which:

Figure 1 is a schematic representation of the interactions between the different elements of a P2P network;
Figure 2 is a schematic representation of mapping content items via a plurality of trackers in a system according to the present invention;
Figure 3 is a schematic representation of possible supply and demand status (SDS) messages in a system according to the present invention;
Figure 4 is a schematic representation of four scenarios possible when employing the method according to the present invention.

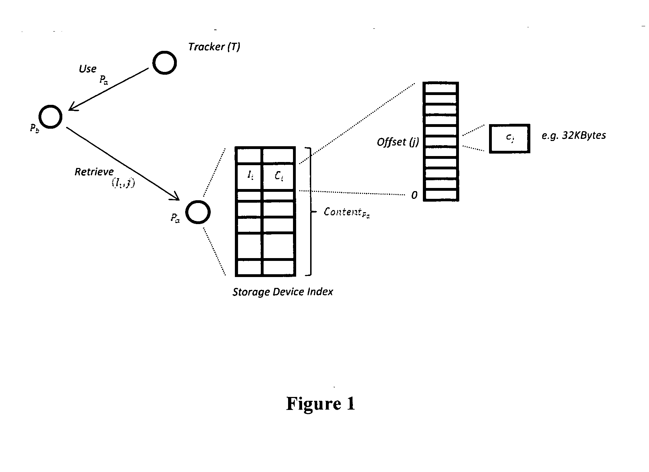

Figure 1 shows the interactions between the different elements of a P2P network. A peer device (hereafter referred to as a peer) $P_a$ in the network is provided with a content storage device and makes available to the network a discrete set of content items $Content_{Pa}$, which it has previously acquired or is in the process of acquiring from the network:

$$Content_{Pa} = \{C_1, C_2, \dots, C_n\}$$

A tracker T is used as a means for tracking the content item $C_i$. Content item $C_i$ is identified by an infohash $I_i$, which is unique within the context of the tracker T that is used to track content item $C_i$. Each content item $C_i$ is divided into content pieces $c_j$, which, at any given time, a peer $P_a$ sharing that content may possess all or a just a subset of:

$$C_i = \{c_1, c_2, \dots, c_n\}$$

Content pieces $c_{i,j}$ can be unambiguously identified within the network by the combination $(I_i, j)$ of an infohash $I_i$ and a content piece offset j from byte 0 of the content item $C_i$. A typical content piece size is in the region of 32KBytes to 1MByte. As will be explained below, content pieces $c_j$ are considered the management unit in the method according to the present invention.

In Figure 1, a peer $P_a$ shares a set of content items $Content_{Pa}$ with the network. $P_a$ provides content pieces $c_j$ in response to requests by another peer $P_b$ which discovered via a tracker T that $P_a$ has pieces of the desired content available for download. The tracker T maintains mappings between content and peers within the network. For each content item $C_i$ a peer $P_b$ is interested in obtaining, the peer $P_b$ queries the tracker T hosting the content item $C_i$, asking which peers it should connect to in order to obtain the content pieces $c_j$ it is missing. It will be appreciated that more than one tracker T are usually used in a P2P network. As will be explained below, the trackers T in a system according to the present invention represent means for providing information about both supply and demand for pieces of content $c_{i,j}$.

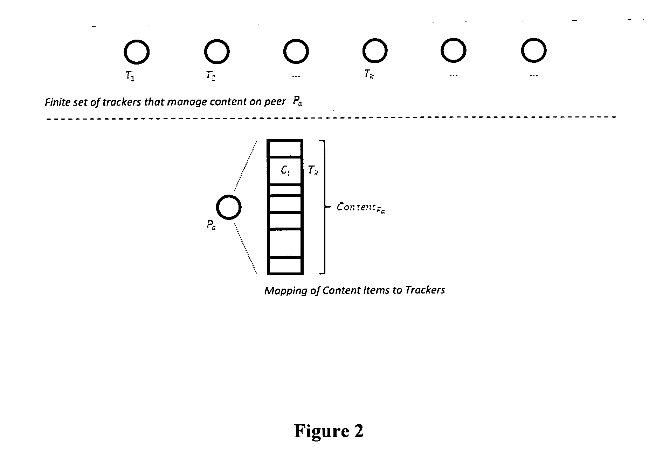

Figure 2 is a schematic representation of mapping content items via a plurality of trackers in a system according to the present invention. Each peer $P_a$ has a relationship to a set of tracking devices:

$$Trackers_{Pa} = \{T_1, T_2, \dots, T_k\}$$

Trackers are the means by which peers both advertise the content pieces they are storing, and discover peers that can supply the content they are interested in acquiring. There can be a one-to-many relationship between any given content piece stored by a peer $P_a$ and the trackers advertising its availability to share that content piece. Each content piece in the set $Content_{Pa}$ is managed by one or more trackers.

As soon as a peer $P_a$ is brought "online" (i.e. within the network), it advertises to its related trackers ($Trackers_{Pa}$) the content pieces it possesses and then asks all those trackers to vote on whether it should power down due to oversupply. As a mediator for access to content pieces by the peer community they serve, any given tracker $T_k$ managing a content piece $c_{i,j}$ is able to determine two key measures: the demand $D_{i,j}$ for content piece $c_{i,j}$ and the supply $S_{i,j}$ for content piece $c_{i,j}$.

The supply $S_{i,j}$ for a content piece $c_{i,j}$ is calculated by each associated tracker $T_k$ as the sum of the available bandwidth B across all peers that are able to share content piece $c_{i,j}$ and it is expressed in units of bytes per second (bps).

$$S_{i,j} = \sum_{P} B_{P}$$

Due to the expected variation in supply of available bandwidth for any given peer, measurements of B are reported to all of the peer's related trackers as an exponential moving average:

$$B_t = \alpha B_{t-1} + (1-\alpha)B_{observed}$$

,wherein $\alpha$ is a smoothing factor that can be determined through empirical research within the network.

The available bandwidth capacity B and the content piece availability are reported to every tracker $T_k$ that the peer connects to $P_a$ via supply and demand status (SDS) messages. Trackers are contacted intermittently by the community of peers they oversee and informed of the content that the peers possess. The content is identified as a combination of the infohash (e.g. based on a content identifier such as a torrent file) and a bitmask that details which content pieces the peer has successfully acquired and is able to share with other peers. The combination of the infohash values, bitmasks, and bandwidth availability figures so reported are the audit information maintained by the tracker $T_k$. It is this information that enables tracker $T_k$ to fulfil its role in an energy management system according to the present invention.

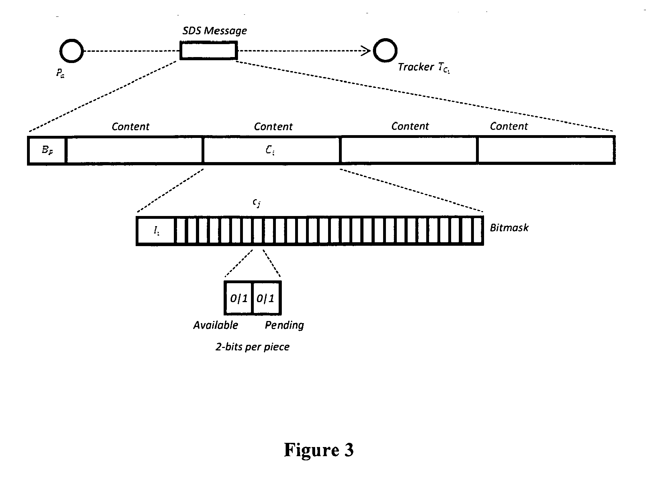

Figure 3 schematically shows a possible format of a SDS message sent from a peer $P_a$ to a tracker $T_{Ci}$. The SDS message contains supply and demand information for the array of content items $C_i$ chosen by the peer $P_a$ to be managed by the tracker $T_{Ci}$. Each content item $C_i$ is identified by its infohash $I_i$ and has a bitmask outlining both the content piece availability and pending status. A pending status of 1 indicates that the content piece was requested by $P_a$, but that the request was unfulfilled in the time period in which the SDS message was compiled.

In the event that multiple trackers have knowledge of the content, for any given content piece $c_{i,j}$ in a system according to the present invention, a peer $P_a$ holding that content must decide which tracker $T_{Ci}$ to notify of changing supply and demand status. Every content item $C_i$ maps to a single tracker $T_{Ci}$ with respect to SDS messaging. It is important to note that the peer $P_a$ shall only update $T_{Ci}$ with the supply and demand metrics, but it may locate peers for sharing purposes from as many trackers as it knows maintain information for the content pieces of $C_i$. Accordingly, the system's load balancing and robustness are maintained.

The demand $D_{i,j}$ for a piece $c_{i,j}$ over an n second period can be calculated as:

$$D_{i,j} = \frac{(\sum_{t=1}^{n} downloads(t, c_{i,j})).size(c_{i,j})}{n} + \frac{(\sum_{t=1}^{n} pending(t, c_{i,j})).size(c_{i,j})}{n}$$

,where downloads(t, $c_{i,j}$) represents the number of downloads of $c_{i,j}$ in the period [t-1, t] seconds and size($c_{i,j}$) is the size of $c_{i,j}$ measured in bytes. A tracker $T_{Ci}$ can calculate this as a delta with respect to the number of peers under its coverage that maintain a copy of the content piece for sharing, thereby having successfully acquired the content piece during that time period. The function pending(t, $c_{i,j}$) corresponds to the number of unfulfilled requests made for $c_{i,j}$ in the sampling period [t-1, t]. In the case of oversupply within the network, it is expected that pending(t, $c_{i,j}$) be equal to zero.

The tracker $T_{Ci}$ calculates an exponential moving average for $D_{i,j}$ as follows:

$$D_t = \alpha D_{t-1} + (1-\alpha)D_{observed}$$

,where $\alpha$ is a smoothing factor that can be determined through empirical research during the operation of the network.

When a peer $P_a$ wants to know whether it should enter a low-power state to preserve energy and thereby optimise efficiency of the network as a whole, it contacts all of the trackers to which it has a connection by sending an ENERGYSAVE_INQUIRY message. During the course of receiving SDS messages, a tracker $T_{Ci}$ will have calculated $D_{i,j}$ and $S_{i,j}$ for all content pieces $c_{i,j}$ reported by peers. In the cases where $D_{i,j} > 0$, the tracker $T_{Ci}$ evaluates the following health function $H_{i,j} = S_{i,j} / D_{i,j}$.

If $H_{i,j}$ is above a threshold $\gamma$ for all content pieces $c_{i,j}$ being shared by the peer $P_a$ and for which the tracker $T_{Ci}$ is advertising availability, the tracker $T_{Ci}$ votes YES in response to the peer's ENERGYSAVE_INQUIRY. It is expected

that $\gamma$ may be a value between 2 and 5 (representing 200%-500% oversupply). However, in practice, $\gamma$ will depend on the underlying network topology and hence may be a tuneable parameter affecting the system's operation. Furthermore, $\gamma$ may need to be optimised through a process of empirical study and operational research, details of which are beyond the scope of this invention.

If all the trackers that a peer $P_a$ connects to vote YES in response to the ENERGYSAVE_INQUIRY, then the peer $P_a$ may either power down, or it may stop sharing content pieces, entering a low-power state until further notice or for a time period $\Delta_{pd}$. $\Delta_{pd}$ can be determined as a function of the network operation and also serves as a tuneable parameter under the control of tracker administrators. The peer $P_a$ may reawaken and resume normal sharing behaviour upon receipt of a SHARE_REQUEST message from one or more of the trackers $T_k$ it relates to. This message may be received by the peer $P_a$ due to the tracker $T_k$ becoming aware of an undersupply within the network. The tracker $T_k$ may select the peer $P_a$ for reawakening based on its average upload availability and therefore its anticipated ability to plug the bandwidth gap between supply and demand.

It will be appreciated that when an end-user is actively using a peer device e.g. watching TV recordings, then the device may not enter a low-power or power down state independently. The method according to the present invention primarily relates to peers in an idle state.

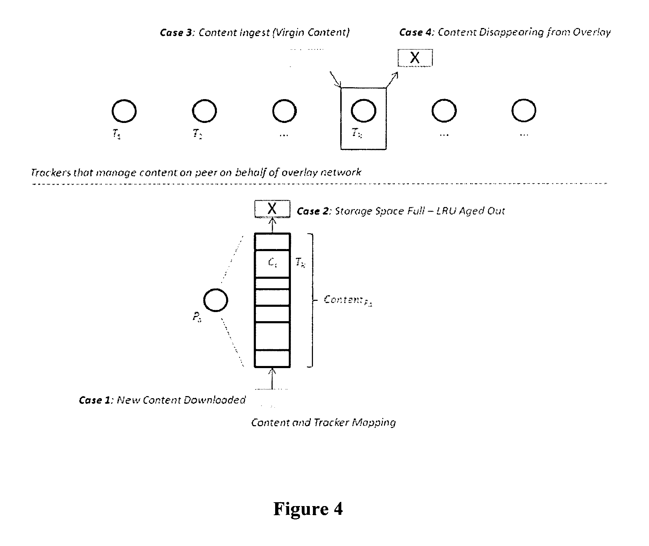

Figure 4 is a schematic representation of four scenarios or cases possible when employing the method according to the present invention.

Case 1 illustrates the scenario when new content enters the pool of shared content pieces by being selected and downloaded by the user of the peer device $P_a$. Because finite storage capacity is assumed for a peer $P_a$, aged content can be moved out of storage according to a heuristic method such as Least Recently Used (LRU) to make space for new content (Case 2). Case 3 represents a situation when a peer $P_a$ ingests content that has never been witnessed before on the overlay network (e.g. new user generated content during a live event). Eventually, certain content becomes so unpopular that it is retired from the network when the last peer $P_a$ maintaining a copy of it deletes it (Case 4). The four scenarios are described below.

Case 1: The peer $P_a$ discovers new content $C_{new}$ and starts to download and share it. In this case, the peer $P_a$ is acquiring content that has been seeded within the network beforehand. The peer $P_a$ engages in the process of peer tracking and downloads content pieces from a variety of different peers. Intermittently, the peer $P_a$ updates a random or otherwise selected tracker $T_k$ it is connected to. SDS messages provide details of the content pieces the peer $P_a$ possesses in order to perform auditing and energy management.

Case 2: $P_a$'s storage capacity is exhausted (for example due to $C_{new}$) thus rendering pieces of content $C_{aged}$ to become aged. When a peer $P_a$ no longer has $C_{aged}$ available for sharing because it has been deleted from its storage area, $P_a$ notifies the associated trackers which, in turn, delete the auditing information for the associated content pieces of $C_{aged}$ they are maintaining.

Case 3: Content $C_{virgin}$ is ingested by a peer $P_a$ into the network for the first time ever. New content $C_{virgin}$ entering the network via a given tracker $T_k$ has demand strength assigned to its content pieces as follows:

$$D_{i,j\ virgin} = 0$$

Its supply strength is simply the bandwidth $B_a$ reported by $P_a$:

$$S_{i,j\ virgin} = B_a$$

Case 4: Content $C_{gone}$ leaves the network because it is deleted from the last peer $P_a$ storing it. In this case, the trackers maintaining information for the pieces of $C_{gone}$ delete all traces of the maintained audit information for the pieces of $C_{gone}$.

When a peer $P_a$ first connects to the network, it must bootstrap itself. The peer $P_a$ starts out without no content pieces to share and all of its uploading capacity is available. The peer $P_a$ determines the bandwidth it can use for upload by uploading to a publicly available speedtest server a test file designed for this purpose. This figure is recorded as $B_0$ and reported to the trackers in a similar manner to new content being downloaded (in Case 1).

It will be appreciated that because the method according to the present invention does not require a central authority or database, it is deemed to be scalable and flexible for a number of different geographic and/or structural implementations. The granularity of tracker management functionality may be global, regional, broken down according to peer density or allocated according to social grouping prevalent between the users of peer devices (e.g. group of friends or affinity groups).

**Claims**

1. A method for controlling the power consumption in a peer-to-peer network of content delivery devices wherein at least one device stores at least one content unit, the method comprising the steps of:

   determining the capacity of the network to deliver each content unit stored on a device;
   determining the demand of the network for each content unit stored on said device;
   comparing the capacity with the demand for each content unit stored on said device; and
   controlling the power supplied to said device based on said comparison.

2. A method according to claim 1, wherein comparing the capacity with the demand comprises calculating the ratio of the capacity to the demand.

3. A method according to claim 2, wherein controlling the power comprises reducing the power supplied to said device if the ratio is above a predetermined threshold.

4. A method according to any of the above claims, wherein each device has a bandwidth and determining the capacity of the network to deliver a content unit comprises calculating the total bandwidth across all devices storing the content unit.

5. A method according to any of the above claims, wherein each device is configured, in use, to download a content unit from a device storing the content unit and determining the demand of the network for a content unit comprises calculating the total number of downloads of the content unit across all devices.

6. A method according to claim 4, wherein the total bandwith is calculated as an exponential moving average.

7. A method according to claim 5, wherein the total number of downloads is calculated as an exponential moving average.

8. A system for controlling the power consumption in a peer-to-peer network of content delivery devices wherein at least one device stores at least one content unit, the system comprising:

   means for determining the capacity of the network to deliver each content unit stored on a device;
   means for determining the demand of the network for each content unit stored on said device;
   means for comparing the capacity with the demand for each content unit stored on said device; and
   means for controlling the power supplied to said device based on said comparison.

**Figure 1**

Finite set of trackers that manage content on peer $P_a$

Mapping of Content Items to Trackers

**Figure 2**

SDS Message

$P_a$

Tracker $T_{C_i}$

Content      Content      Content      Content

$B_p$

$C_i$

$c_j$

$I_i$

Bitmask

| 0/1 | 0/1 |

Available    Pending

2-bits per piece

**Figure 3**

*Case 3*: Content ingest (Virgin Content)          *Case 4*: Content Disappearing from Overlay

Content and Tracker Mapping

**Figure 4**

Europäisches
Patentamt

European
Patent Office

Office européen
des brevets

# EUROPEAN SEARCH REPORT

Application Number

EP 09 16 7394

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2009/182834 A1 (ZETTLER THOMAS [DE] ET AL) 16 July 2009 (2009-07-16)<br>* abstract *<br>* paragraphs [0002] - [0006] *<br>* paragraph [0028] *<br>* paragraphs [0040] - [0050] *<br>* claims 1-5 *<br>* figures 1,2 * | 1-8 | INV.<br>H04L29/08<br>H04L12/10 |
| A | US 2007/280255 A1 (TSANG DANNY H K [CN] ET AL) 6 December 2007 (2007-12-06)<br>* abstract *<br>* paragraphs [0003] - [0012] *<br>* paragraphs [0037] - [0042] *<br>* paragraphs [0065] - [0068] * | 1-8 | |
| A | US 2006/095518 A1 (DAVIS JESSE H Z [US] ET AL) 4 May 2006 (2006-05-04)<br>* abstract *<br>* paragraphs [0004] - [0011] *<br>* paragraphs [0047] - [0049] * | 1-8 | TECHNICAL FIELDS SEARCHED (IPC) |
| A | US 2005/229226 A1 (RELAN SANDEEP [IN] ET AL) 13 October 2005 (2005-10-13)<br>* abstract *<br>* paragraphs [0017] - [0019] *<br>* paragraphs [0198] - [0202] * | 1-8 | H04L |

The present search report has been drawn up for all claims

| Place of search | Date of completion of the search | Examiner |
|---|---|---|
| Munich | 9 February 2010 | Buhleier, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 16 7394

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2010

| Patent document cited in search report | Publication date | Patent family member(s) | Publication date |
|---|---|---|---|
| US 2009182834 A1 | 16-07-2009 | NONE | |
| US 2007280255 A1 | 06-12-2007 | NONE | |
| US 2006095518 A1 | 04-05-2006 | NONE | |
| US 2005229226 A1 | 13-10-2005 | NONE | |

EPO FORM P0459

For more details about this annex : see Official Journal of the European Patent Office, No. 12/82